# EUROPÄISCHE PATENTSCHRIFT

(11) **EP 3 651 167 B1**
(45) Veröffentlichungstag und Bekanntmachung des Hinweises auf die Patenterteilung: **03.04.2024**
(21) Anmeldenummer: 19207546.3
(22) Anmeldetag: 06.11.2019
(51) Int. Cl.: H01F 7/08, H01F 7/16, H01F 41/02

(54) **ELEKTROMAGNETISCHER AKTUATOR MIT LAGERELEMENT**
ELECTROMAGNETIC ACTUATOR WITH BEARING ELEMENT
ACTIONNEUR ÉLECTROMAGNÉTIQUE POURVU D'ÉLÉMENT DE PALIER

(30) Priorität: 09.11.2018 DE 102018128144
(43) Veröffentlichungstag der Anmeldung: 13.05.2020
(73) Patentinhaber: SVM Schultz Verwaltungs-GmbH & Co. KG, 87700 Memmingen (DE)
(72) Erfinder: Mang, Helmut, 87700 Memmingen (DE); Schreiber, Florian, 89284 Paffenhofen/Kadeltshofen (DE); Scholz, Johannes, 87772 Pfaffenhausen (DE); Frieß, Matthias, 87700 Memmingen (DE)
(74) Vertreter: Patentanwälte Olbricht, Buchhold, Keulertz Partnerschaft mbB

(56) Entgegenhaltungen:
- EP-A1- 0 465 813
- DE-A1-102007 061 862
- DE-A1-102016 123 827
- DE-A1-102016 124 010
- DE-A1-102016 213 984
- US-A- 5 853 028
- US-A1- 2007 176 720

## Beschreibung

Die Erfindung betrifft einen elektromagnetischen Aktuator zum Betätigen eines Ventils. Der elektromagnetische Aktuator umfasst ein Gehäuse, einen Kern und ein Joch, die einander gegenüberliegend an dem Gehäuse oder in dem Gehäuse angeordnet sind, einen mindestens eine Spulenwicklung tragenden Spulenkörper, der innerhalb des Gehäuses angeordnet ist und einen Ankerraum zumindest teilweise umgibt und einen Anker, der innerhalb des Ankerraums in einer axialen Richtung beweglich angeordnet ist. Ferner umfasst der elektromagnetische Aktuator ein Lagerelement, das an dem Joch fixiert ist und einen scheibenförmigen, insbesondere ringscheibenförmigen Befestigungsabschnitt und einen den Anker lagernden rohrförmigen Lagerabschnitt aufweist, der an den Befestigungsabschnitt einstückig angeformt ist.

Derartige elektromagnetische Aktuatoren sind im Stand der Technik in zahlreichen unterschiedlichen Ausgestaltungen bekannt und dienen dem Betätigen einer mechanisch linear betätigbaren Vorrichtung, beispielsweise eines Ventilschiebers eines Ventils.

So ist aus der DE 10 2007 061862 A1 eine Magnetanordnung mit Kern, Joch und Anker bekannt, wobei ein Sinterlager am Joch fixiert ist. Das Sinterlager ist längsschnittlich L-förmig und weist einen der Anker lagernden rohrförmigen Abschnitt auf.

Die EP 0 465 813 A1 offenbart eine elektromagnetische Stelleinrichtung, umfassend einen Kern, ein Joch und einen Anker. Offenbart ist zudem ein L-förmiges Bauteil mit weichmagnetischem Hohlzylinder, der einen Stößel des Ankers lagert.

Auch die US 5 853 028 A beschreibt einen Elektromagneten mit Kern, Joch und Anker, wobei der Anker anhand eines rohrförmigen Abschnitts eines Lagers gelagert ist.

Aus der DE 10 2016 124 010 A1 geht ein elektromagnetisch betriebenes Ventil hervor, welches einen Kern, ein Joch und einen Anker aufweist. Ein Gleitlager dient der Führung eines Stößels des Ankers.

Ebenso offenbart die DE 10 2016 123 827 A1 ein Magnetventil, dessen Betätigungsstößel durch eine Lagerbuchse eines Abschlussdeckels ragt.

Die US 2007/176720 A1 lehrt einen Magnetaktuator , dessen Anker außenumfangsseitig von einem Lager geführt ist

Die Funktionsweise des eingangs genannten elektromagnetischen Aktuators beruht auf einem sogenannten magnetischen Kreis, d.h. einem geschlossenen Pfad eines magnetischen Flusses, der das Gehäuse, den Kern, das Joch und den Anker umfasst. Wenn an die Spulenwicklung eine Spannung angelegt wird, fließt in der Spulenwicklung ein Strom, wodurch in dem magnetischen Kreis des elektromagnetischen Aktuators ein magnetischer Fluss erzeugt wird. Der magnetische Fluss beaufschlagt den Anker mit einer Kraft, die den Anker in der axialen Richtung linear verschiebt.

Der Anker ist in dem Kern und in dem Joch des elektromagnetischen Aktuators gelagert. Dazu sind Außenflächenabschnitte des Ankers, die im Bereich des Kerns bzw. des Jochs angeordnet sind, jeweils mit korrespondierenden Innenflächenabschnitten des Kerns bzw. des Jochs in Anlage.

Üblicherweise wird das Joch in einem zerspanenden Verfahren, insbesondere durch Drehen gefertigt. Drehteile können mit einer hohen Präzision hergestellt werden. Allerdings die Drehfertigung des Jochs relativ kostspielig. Zudem kann durch Drehen ausschließlich ein rotationssymmetrisches Joch gefertigt werden, was im Falle einer gewünschten Abweichung von der Rotationssymmetrie mindestens einen weiteren Fertigungsschritt erfordert und die Herstellungskosten des Jochs entsprechend erhöht.

Die Innenflächenabschnitte des Jochs können auch von einem separaten in das Joch eingesetzten Lagerelement bereitgestellt sein. Allerdings kann der elektromagnetische Aktuator aufgrund des zusätzlichen Lagerelements ein großen axialer Bauraum benötigen.

Es ist deshalb eine Aufgabe der Erfindung, einen elektromagnetischen Aktuator zu schaffen, welcher hinsichtlich der erwähnten Nachteile verbessert ist und bei geringem axialen Bauraumbedarf kostengünstig herstellbar ist.

Dies wird erfindungsgemäß durch einen elektromagnetischen Aktuator gemäß Hauptanspruch 1 erreicht. Vorteilhafte Weiterentwicklungen sind den Unteransprüchen zu entnehmen.

Die Erfindung betrifft einen elektromagnetischen Aktuator zum Betätigen eines Ventils, mit einem Gehäuse, einem Kern und einem Joch, die einander gegenüberliegend an dem Gehäuse oder in dem Gehäuse angeordnet sind, einem mindestens eine Spulenwicklung tragenden Spulenkörper, der innerhalb des Gehäuses angeordnet ist und einen Ankerraum zumindest teilweise umgibt, einem Anker, der innerhalb des Ankerraums in einer axialen Richtung beweglich angeordnet ist und einen Ankerkörper und eine Ankerstange umfasst, und einem Lagerelement, das an dem Joch fixiert ist und einen scheibenförmigen, insbesondere ringscheibenförmigen Befestigungsabschnitt und einen den Anker lagernden rohrförmigen Lagerabschnitt aufweist, der an den Befestigungsabschnitt einstückig angeformt ist. Der Befestigungsabschnitt dient dazu, das Lagerelement an dem Joch zu fixieren, und der Lagerabschnitt dient dazu, den Anker zu lagern. Dank der Scheibenform des Befestigungsabschnitts wird zum Befestigen des Lagerelements am Joch in axialer Richtung ein geringer axialer Bauraum benötigt. Dank der Rohrform des Lagerabschnitts stellt das Lagerelement zum Lagern des Ankers eine bezogen auf die axiale Richtung ausgedehnte Lagerfläche bereit. Diese Form des Lagerelements ist damit sowohl hinsichtlich der axialen Befestigungslänge und als auch hinsichtlich der axialen Lagerlänge von Vorteil.

Erfindungsgemäß ist vorgesehen, dass der Lagerabschnitt von dem Befestigungsabschnitt nach innen vorsteht. Der nach innen vorstehende Lagerabschnitt verringert den in axialer Richtung benötigten Bauraum des elektromagnetischen Aktuators weiter.

Erfindungsgemäß ist vorgesehen, dass eine radiale Innenfläche einer Ausnehmung des Ankerkörpers an einer radialen Außenfläche des Lagerabschnitts des Lagerelements gelagert ist. Bei dieser Variante bilden korrespondierende Flächen des Ankerkörpers und des Lagerabschnitts das Lager für den Anker.

Vorzugsweise besteht das Lagerelement aus Metall. Insbesondere hat sich die Verwendung einer Bronze oder von Messing als Material des Lageelementes bewährt. Es ist aber auch möglich, das Lageelement als Stahlteil, insbesondere als tiefgezogenes oder auch als gedrehtes Stahlteil auszubilden. Gerade die Variante als tiefgezogenes Stahlteil ist in der Herstellung sehr kostengünstig, da es gelingt, tiefgezogene Stahlteile mit ausreichender Genauigkeit, wie sie bei dem Anwendungsbereich eines Lagerelementes vorgesehen sind, herzustellen.

In einer weiteren bevorzugten Ausführungsform ist vorgesehen, dass das Joch als ein Sinterformteil ausgebildet ist oder in einem formativen Verfahren gefertigt ist, insbesondere mittels 3D-Druckens, Metallpulverspritzgießens, selektiven Laserschmelzens oder selektiven Lasersinterns. Sintern oder formatives Fertigen sind kostengünstige Herstellungsverfahren, mit welchen sich zudem nahezu beliebig ausgeformte Werkstücke in einem einzigen Arbeitsgang mit ausreichender Genauigkeit herstellen lassen. Folglich lässt sich ein aufwändiges und kostspieliges zweischrittiges Fertigen des Jochs mittels eines Drehens und eines Fräsens vermeiden.

Die Erfindung betrifft ferner einen elektromagnetischen Aktuator zum Betätigen eines Ventils, mit einem Gehäuse, einem Kern und einem Joch, die einander gegenüberliegend an dem Gehäuse oder in dem Gehäuse angeordnet sind, einem mindestens eine Spulenwicklung tragenden Spulenkörper, der innerhalb des Gehäuses angeordnet ist und einen Ankerraum zumindest teilweise umgibt, einem Anker, der innerhalb des Ankerraums in einer axialen Richtung beweglich angeordnet ist, und einem den Anker lagernden Lagerelement, das an dem Joch fixiert ist und den Anker lagert.

In einer bevorzugten Ausgestaltung ist vorgesehen, dass das Joch als ein Sinterformteil ausgebildet ist oder in einem formativen Verfahren gefertigt ist, insbesondere mittels 3D-Druckens, Metallpulverspritzgießens, selektiven Laserschmelzens oder selektiven Lasersinterns. Sintern oder formatives Fertigen sind kostengünstige Herstellungsverfahren, mit welchen sich zudem nahezu beliebig ausgeformte Werkstücke in einem einzigen Arbeitsgang herstellen lassen. Folglich lässt sich ein aufwändiges und kostspieliges zweischrittiges Fertigen des Jochs mittels eines Drehens und eines Fräsens vermeiden.

Geschickter Weise ist vorgesehen, dass das Lagerelement einen scheibenförmigen, insbesondere ringscheibenförmigen Befestigungsabschnitt und einen den Anker lagernden rohrförmigen Lagerabschnitt aufweist, der an den Befestigungsabschnitt einstückig angeformt ist und von dem Befestigungsabschnitt nach innen vorsteht. Der Befestigungsabschnitt dient dazu, das Lagerelement an dem Joch zu fixieren, und der Lagerabschnitt dient dazu, den Anker zu lagern. Dank der Scheibenform des Befestigungsabschnitts wird zum Befestigen des Lagerelements am Joch in axialer Richtung ein geringer axialer Bauraum benötigt. Dank der Rohrform des Lagerabschnitts stellt das Lagerelement zum Lagern des Ankers eine bezogen auf die axiale Richtung ausgedehnte Lagerfläche bereit. Diese Form des Lagerelements ist damit sowohl hinsichtlich der axialen Befestigungslänge und als auch hinsichtlich der axialen Lagerlänge von Vorteil. Der nach innen vorstehende Lagerabschnitt verringert den in axialer Richtung benötigten Bauraum des elektromagnetischen Aktuators weiter.

Des Weiteren ist vorgesehen, dass der Anker einen Ankerkörper und eine Ankerstange umfasst, die den Ankerkörper durchgreift und in dem Ankerkörper fixiert ist. Der zweiteilige Aufbau des Ankers erlaubt ein Verwenden verschiedener Materialien für den Ankerkörper und die Ankerstange. Das Fixieren der Ankerstange kann beispielsweise mittels einer Presspassung, eines Formschlusses oder einer Schweißung, Lötung oder Klebung erfolgen.

Die Ankerstange kann eine zentrale Bohrung des Kerns durchgreifen und in der zentralen Bohrung des Kerns gelagert sein. Die Ankerstange steht zumindest in einer Position des Ankers aus dem Kern nach außen vor, um beispielsweise einen Ventilschieber eines mit dem elektromagnetischen Aktuator verbundenen Ventils zu betätigen. Zudem wird der Kern verwendet, um den Anker gegenüberliegend zu dem Joch zu lagern.

Geschickter Weise ist vorgesehen, dass die Ankerstange das Lagerelement durchgreift und in dem Lagerabschnitt des Lagerelements gelagert ist. Mit anderen Worten wird das Lager für den Anker von einer Innenfläche des Lagerabschnitts des Lagerelements und einem Außenflächenabschnitt der Ankerstange des Ankers gebildet.

Des Weiteren ist günstiger Weise vorgesehen, dass der Ankerkörper eine zylinderförmige Ausnehmung aufweist, die in einer zu dem Lagerelement weisenden Stirnfläche des Ankerkörpers ausgebildet ist und in die der Lagerabschnitt des Lagerelements eingreift, wenn der Ankerkörper mit dem Befestigungsabschnitt des Lagerelements in Anlage ist. Die zylinderförmige Ausnehmung erlaubt es dem Ankerkörper, in einer Position mit dem Befestigungsabschnitt des Lagerelements in Anlage zu kommen, indem sie einen Aufnahmeraum für den Lagerabschnitt des Lagerelements bereitstellt. Auf diese Weise kann ein in der axialen Richtung benötigter Bauraum des elektromagnetischen Aktuators gering sein.

In einer vorteilhaften Ausgestaltung ist vorgesehen, dass der Lagerabschnitt in jeder Position des Ankerkörpers in die Ausnehmung des Ankerkörpers eingreift. Mit anderen Worten besteht in jeder Position des Ankerkörpers ein axialer Überlapp zwischen dem Lagerabschnitt und dem Ankerkörper, wodurch der in axialer Richtung benötigte Bauraum weiter verringert wird.

In einer vorteilhaften Ausgestaltung ist vorgesehen, dass das Joch eine vorzugsweise zylinderförmige Ausnehmung aufweist, die in einer äußeren Stirnfläche des Jochs ausgebildet ist und in der der Befestigungsabschnitt des Lagerelements fixiert ist. Die Ausnehmung ermöglicht ein Versenken des Lagerelements in dem Joch, wodurch der in axialer Richtung benötigte Bauraum weiter verringert wird.

Günstiger Weise ist der Befestigungsabschnitt des Lagerelements in der Ausnehmung des Jochs verpresst. Das Lagerelement ist somit mittels einer Presspassung in dem Joch gehalten.

Des Weiteren ist vorgesehen, dass das Joch einen scheibenförmigen, insbesondere ringscheibenförmigen Radialabschnitt und einen rohrförmigen Axialabschnitt aufweist, welcher an den scheibenförmigen Radialabschnitt einstückig angeformt ist und von dem scheibenförmigen Radialabschnitt nach innen vorsteht. Das derart geformte Joch leitet den magnetischen Fluss besonders gut, wodurch der magnetische Kreis des elektromagnetischen Aktuators verbessert ist.

Idealerweise ist die axiale Höhe des Radialabschnitts größer als die radiale Dicke des Axialabschnitts, vorzugsweise mindestens 1,5 mal, bevorzugt mindestens 1,8 mal, insbesondere bevorzugt mindestens 2 mal größer ist als die radiale Dicke des Axialabschnitts. Diese Abmessungsverhältnisse des Radialabschnitts und des Axialabschnitts gehen mit einem starken magnetischen Fluss in dem Joch einher. Dies ist insbesondere bei einem als Sinterformteil, bzw. oder in einem formativen Verfahren (sieh oben) gebildeten Joch von Vorteil, um so eine ausreichende Konzentration von Magnetfeldlinien im Axialabschnitt zur Verfügung zu stellen.

Geschickter Weise ist vorgesehen, dass das Gehäuse eine zylinderförmige Umfangswandung mit einer umlaufenden Stufe aufweist, die entlang einer Innenseite eines Rands der Umfangswandung ausgebildet ist und in der der Radialabschnitt des Jochs fixiert ist. Die Stufe bildet eine Anlagefläche für das Joch und erleichtert ein präzises Positionieren des Jochs in dem Gehäuse.

Des Weiteren ist günstiger Weise vorgesehen, dass der Radialabschnitt des Jochs in der Stufe der Umfangswandung verpresst ist. Das Joch ist also mittels einer Presspassung in dem Gehäuse gehalten.

In einer vorteilhaften Ausgestaltung ist vorgesehen, dass der Spulenkörper an einer äußeren Umfangsfläche des Axialabschnitts des Jochs und/oder an einer äußeren Umfangsfläche des Kerns fixiert ist. Auf diese Weise sind dedizierte Mittel zum Halten des Spulenkörpers entbehrlich, was mit einer geringen Komponentenzahl und einem einfachen Montieren des elektromagnetischen Aktuators einhergeht.

Geschickter Weise ist vorgesehen, dass der Spulenkörper an einer äußeren Umfangsfläche des Axialabschnitts des Jochs und/oder an einer äußeren Umfangsfläche des Kerns kraftschlüssig oder formschlüssig gehalten ist. Mittels des Kraftschlusses oder des Formschlusses ist der Spulenkörper innerhalb des Gehäuses festgelegt.

In einer bevorzugten Ausgestaltung des Vorschlags ist vorgesehen, dass der Kern eine zylinderförmige Ausnehmung zur Aufnahme des Ankerkörpers aufweist, die in einer nach innen weisenden Stirnfläche des Kerns ausgebildet ist. Mit anderen Worten kann der Ankerkörper in einer Position des Ankers in den Kern eingreifen, wodurch die axiale Länge des elektromagnetischen Aktuators verringert ist.

Geschickter Weise ist vorgesehen, dass eine radiale Außenfläche des Ankerkörpers an einer radialen Innenfläche der Ausnehmung gelagert ist. Bei dieser Variante bilden korrespondierende Flächen des Ankerkörpers und des Kerns das Lager für den Anker.

Des Weiteren ist vorgesehen, dass die Ausnehmung gemeinsam mit dem Axialabschnitt des Jochs einen Ankerraum für den Ankerkörper definiert. Der Ankerraum definiert den Hub des Ankers und damit des elektromagnetischen Aktuators.

Der Kern und das Joch sind bevorzugt zueinander axial beabstandet. Durch den axialen Abstand wird der Hub des Ankers eingestellt. Zudem verhindert der axiale Abstand einen unmittelbaren magnetischen Fluss zwischen dem Kern und dem Joch.

Des Weiteren umfasst der elektromagnetische Aktuator ein Buchsenelement, das für ein Einstecken eines korrespondierenden Steckers vorgesehen ist und an der äußeren Stirnfläche des Jochs angeordnet ist. Das Buchsenelement erlaubt ein einfaches Anschließen des elektromagnetischen Aktuators an eine Spannungsquelle bzw. ein einfaches Trennen des elektromagnetischen Aktuators von einer Spannungsquelle, beispielsweise zu Wartungszwecken.

Geschickter Weise ist vorgesehen, dass das Buchsenelement mit der äußeren Stirnfläche des Jochs verklebt ist. Durch das Verkleben wird eine flächige Befestigung des Buchsenelements an dem Joch geschaffen, was eine besonders sichere Verbindung zwischen dem Buchsenelement und dem Joch darstellt.

Ferner ist vorgesehen, dass das Buchsenelement mindestens zwei elektrische Kontakte zum elektrisch leitenden Kontaktieren zweier korrespondierender elektrischer Kontakte eines Steckers aufweist, die jeweils mit der mindestens einen Spulenwicklung elektrisch leitend verbunden sind. Zwei elektrische Kontakte sind zum Anschließen zweier Pole einer Spannungsquelle erforderlich. Im Falle mehrerer separater Spulenwicklungen können entsprechend mehrere Paare von elektrischen Kontakten vorgesehen sein.

Das Buchsenelement kann eine Ausnehmung aufweisen, die in einer zu dem Joch weisenden Außenfläche ausgebildet ist, und eine Abdeckplatte umfasst, die in die Ausnehmung eingesetzt und insbesondere die Ausnehmung zumindest teilweise verdeckt. Die Abdeckplatte erlaubt ein zweischrittiges Befestigen des Buchsenelements an dem Joch. Wenn die Abdeckplatte an dem Joch befestigt ist, kann sie ein Eindringen von Verunreinigungen wie z.B. Spänen in den elektromagnetischen Aktuator verhindern.

In der Zeichnung ist die Erfindung insbesondere in einem Ausführungsbeispiel schematisch dargestellt. Es zeigt:

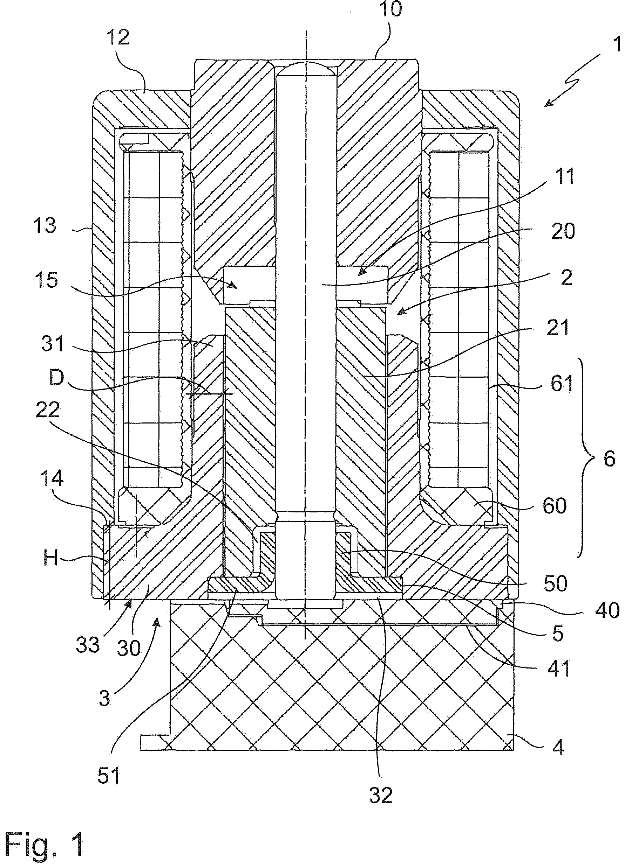

- Fig. 1: eine schematische Darstellung einer geschnittenen Ansicht eines elektromagnetischen Aktuators nach einer Ausführungsform der vorliegenden Erfindung.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Figur 1 zeigt einen elektromagnetischer Aktuator 1, der beispielsweise zum Betätigen eines Ventils verwendet wird. Der elektromagnetische Aktuator 1 umfasst zunächst ein Gehäuse 12. Das Gehäuse 12 weist eine zylinderförmige Umfangswandung 13 mit einer umlaufenden Stufe 14 auf, die entlang einer Innenseite eines axialen Rands der Umfangswandung 13 ausgebildet ist.

Der elektromagnetische Aktuator 1 umfasst ferner einen Kern 10 mit einer zentralen Bohrung, der in dem Gehäuse 12 an einem der Stufe 14 gegenüberliegenden axialen Ende des Gehäuses 12 angeordnet ist. Der Kern 10 weist ferner eine zylinderförmige Ausnehmung 15 auf, die in einer nach innen weisenden Stirnfläche des Kerns 10 ausgebildet ist.

Weiterhin umfasst der elektromagnetische Aktuator 1 ein Joch 3, das als ein Sinterteil ausgebildet oder in einem formativen Verfahren gefertigt, beispielsweise mittels 3D-Druckens, Metallpulverspritzgießens, selektiven Laserschmelzens oder selektiven Lasersinterns, und in dem Gehäuse 12 angeordnet ist. Dazu weist das Joch 3 einen ringscheibenförmigen Radialabschnitt 30 auf, der in der umlaufenden Stufe 14 fixiert, genauer gesagt verpresst ist. Ferner weist das Joch 3 einen rohrförmigen Axialabschnitt 31 auf, welcher an den ringscheibenförmigen Radialabschnitt 30 einstückig angeformt ist und von dem ringscheibenförmigen Radialabschnitt 30 nach innen vorsteht. Das Joch 3 weist zudem eine zylinderförmige Ausnehmung 32 auf, die in einer äußeren Stirnfläche 33 des Jochs 3 ausgebildet ist.

Die axiale Höhe H des Radialabschnitts 30 ist 2 mal größer als die radiale Dicke D des Axialabschnitts 31, kann aber relativ zu der radialen Dicke D noch größer sein. Es kann aber auch ausreichend sein, dass die axiale Höhe H mindestens 1,5 mal größer ist als die radiale Dicke D ist.

Der Kern 10 und das Joch 3 sind zueinander axial beabstandet und einander gegenüberliegend angeordnet. Die Ausnehmung 15 des Kerns 10 definiert gemeinsam mit dem Axialabschnitt 31 des Jochs 3 einen Ankerraum 11.

Zudem umfasst der elektromagnetische Aktuator 1 eine Spule 6 mit einer Spulenwicklung 61 und einem Spulenkörper 60, der innerhalb des Gehäuses 12 fixiert ist. Der Spulenkörper 60 umgibt den Ankerraum 11 und trägt die Spulenwicklung 61. Der Spulenkörper 60 ist an einer äußeren Umfangsfläche des Axialabschnitts 31 des Jochs 3 und an einer äußeren Umfangsfläche des Kerns 10 fixiert. Genauer gesagt ist der Spulenkörper 60 an der äußeren Umfangsfläche des Axialabschnitts 31 des Jochs 3 und an der äußeren Umfangsfläche des Kerns 10 kraftschlüssig gehalten, kann aber alternativ oder zusätzlich auch formschlüssig gehalten sein.

Der elektromagnetische Aktuator 1 umfasst überdies ein Lagerelement 5, das an dem Joch 3 fixiert ist. Dazu weist das Lagerelement 5 einen ringscheibenförmigen Befestigungsabschnitt 51 auf, der in der Ausnehmung 32 des Jochs 3 fixiert, genauer gesagt verpresst ist. Das Lagerelement 5 weist weiterhin einen rohrförmigen Lagerabschnitt 50 auf, der an den Befestigungsabschnitt 51 einstückig angeformt ist und von dem Befestigungsabschnitt 51 nach innen vorsteht.

Ferner umfasst der elektromagnetische Aktuator 1 einen Anker 2, der innerhalb des Ankerraums 11 in einer axialen Richtung beweglich angeordnet ist. Der Anker 2 umfasst einen Ankerkörper 21 und eine Ankerstange 20, die den Ankerkörper 21 durchgreift und in dem Ankerkörper 21 fixiert ist.

Der Ankerkörper 21 ist in dem Ankerraum 11 angeordnet, der auf diese Weise einen axialen Hub des Ankers 12 definiert. Der Ankerkörper 21 weist eine zylinderförmige Ausnehmung 22 auf, die in einer zu dem Lagerelement 5 weisenden Stirnfläche des Ankerkörpers 21 ausgebildet ist und in die der Lagerabschnitt 50 des Lagerelements 5 in jeder Position des Ankerkörpers 21 eingreift, insbesondere wenn der Ankerkörper 21 mit dem Befestigungsabschnitt 51 des Lagerelements 5 in Anlage ist.

Die Ankerstange 20 durchgreift die zentrale Bohrung des Kerns 10 und das Lagerelement 5 und ist in der zentralen Bohrung des Kerns 10 und in dem Lagerabschnitt 50 des Lagerelements 5 gelagert. Alternativ oder zusätzlich kann eine radiale Innenfläche der Ausnehmung 22 des Ankerkörpers 21 an einer radialen Außenfläche des Lagerabschnitts 50 des Lagerelements 5 und/oder eine radiale Außenfläche des Ankerkörpers 21 an einer radialen Innenfläche der Ausnehmung 15 des Kerns 10 gelagert sein.

Der elektromagnetische Aktuator 1 umfasst weiterhin ein Buchsenelement 4, das für ein Einstecken eines korrespondierenden Steckers vorgesehen ist. Das Buchsenelement 4 weist eine Ausnehmung 41 auf, die in einer zu dem Joch 3 weisenden Stirnfläche ausgebildet ist, und umfasst eine zu der Ausnehmung 41 korrespondierende Anschlussplatte 40, die in die Ausnehmung 41 eingesetzt ist und die Ausnehmung 41 zumindest teilweise verdeckt. Das Buchsenelement 4, insbesondere die Anschlussplatte 40 des Buchsenelements 4 ist an der äußeren Stirnfläche 33 des Jochs 3 angeordnet und mit der äußeren Stirnfläche 33 des Jochs 3 verklebt.

Das Buchsenelement 4 weist mindestens zwei elektrische Kontakte zum elektrisch leitenden Kontaktieren zweier korrespondierender elektrischer Kontakte eines korrespondierenden Steckers auf, die jeweils mit der mindestens einen Spulenwicklung 61 elektrisch leitend verbunden sind.

Das Joch 3 für den elektromagnetischen Aktuator 1 wird durch Sintern oder formativ gefertigt, d.h. mittels 3D-Druckens, Metallpulverspritzgießens, selektiven Laserschmelzens, selektiven Lasersinterns oder dergleichen. Mit anderen Worten wird das Joch 3 nicht mittels Drehens und Fräsens, d.h. mittels eines zerspanenden Fertigungsverfahren, hergestellt. Dank des Lagerelements 5 hat das Joch 3 selbst keine Lagerfunktion für den Anker 2 und braucht entsprechend nicht mit der hohen Präzision eines Zerspanungsverfahrens gefertigt zu sein. Das formative Fertigen des Jochs 3 bietet gegenüber einem zerspanenden Fertigen wirtschaftliche Vorteile.

## Patentansprüche

1. Elektromagnetischer Aktuator (1) zum Betätigen eines Ventils, mit einem Gehäuse (12), einem Kern (10) und einem Joch (3), die einander gegenüberliegend an dem Gehäuse (12) oder in dem Gehäuse (12) angeordnet sind, einem mindestens eine Spulenwicklung (61) tragenden Spulenkörper (60), der innerhalb des Gehäuses (12) angeordnet ist und einen Ankerraum (11) zumindest teilweise umgibt, einem Anker (2), der innerhalb des Ankerraums (11) in einer axialen Richtung beweglich angeordnet ist und einen Ankerkörper (21) und eine Ankerstange (20) umfasst, und einem Lagerelement (5), das an dem Joch (3) fixiert ist und einen scheibenförmigen, insbesondere ringscheibenförmigen Befestigungsabschnitt (51) und einen den Anker (2) lagernden rohrförmigen Lagerabschnitt (50) aufweist, der an den Befestigungsabschnitt (51) einstückig angeformt ist, wobei der Lagerabschnitt (50) von dem Befestigungsabschnitt (51) nach innen vorsteht, **dadurch gekennzeichnet, dass** eine radiale Innenfläche einer Ausnehmung (22) des Ankerkörpers (21) an einer radialen Außenfläche des Lagerabschnitts (50) des Lagerelements (5) gelagert ist.

2. Elektromagnetischer Aktuator nach Anspruch 1, **dadurch gekennzeichnet, dass** das Joch (3) als ein Sinterformteil ausgebildet ist oder in einem formativen Verfahren gefertigt ist, insbesondere mittels 3D-Druckens, Metallpulverspritzgießens, selektiven Laserschmelzens oder selektiven Lasersinterns.

3. Elektromagnetischer Aktuator nach einem der vorhergehenden Ansprüche, **dadurch gekennzeichnet, dass** die Ankerstange (20) eine zentrale Bohrung des Kerns (10) durchgreift und in der zentralen Bohrung des Kerns (10) gelagert ist und/oder die Ankerstange (20) das Lagerelement (5) durchgreift und in dem Lagerabschnitt (50) des Lagerelements (5) gelagert ist.

4. Elektromagnetischer Aktuator nach einem der vorhergehenden Ansprüche, **dadurch gekennzeichnet, dass** der Ankerkörper (21) eine zylinderförmige Ausnehmung (22) aufweist, die in einer zu dem Lagerelement (5) weisenden Stirnfläche des Ankerkörpers (21) ausgebildet ist und in die der Lagerabschnitt (50) des Lagerelements (5) eingreift, wenn der Ankerkörper (21) mit dem Befestigungsabschnitt (51) des Lagerelements (5) in Anlage ist und/oder der Lagerabschnitt (50) in jeder Position des Ankerkörpers (21) in die Ausnehmung (22) des Ankerkörpers (21) eingreift.

5. Elektromagnetischer Aktuator nach einem der vorhergehenden Ansprüche, **dadurch gekennzeichnet, dass** das Joch (3) eine vorzugsweise zylinderförmige Ausnehmung (32) aufweist, die in einer äußeren Stirnfläche (33) des Jochs (3) ausgebildet ist und in der der Befestigungsabschnitt (51) des Lagerelements (5) fixiert ist, wobei insbesondere der Befestigungsabschnitt (51) des Lagerelements (5) in der Ausnehmung (32) des Jochs (3) verpresst ist.

6. Elektromagnetischer Aktuator nach einem der vorhergehenden Ansprüche, **dadurch gekennzeichnet, dass** das Joch (3) einen scheibenförmigen, insbesondere ringscheibenförmigen Radialabschnitt (30) und einen rohrförmigen Axialabschnitt (31) aufweist, welcher an den scheibenförmigen Radialabschnitt (30) einstückig angeformt ist und von dem scheibenförmigen Radialabschnitt (30) nach innen vorsteht.

7. Elektromagnetischer Aktuator nach Anspruch 6, **dadurch gekennzeichnet, dass** die axiale Höhe (H) des Radialabschnitts (30) größer ist als die radiale Dicke (D) des Axialabschnitts (31), vorzugsweise mindestens 1,5 mal, bevorzugt mindestens 1,8 mal, insbesondere bevorzugt mindestens 2 mal größer ist als die radiale Dicke (D) des Axialabschnitts (31).

8. Elektromagnetischer Aktuator nach einem der vorhergehenden Ansprüche, **dadurch gekennzeichnet, dass** das Gehäuse (12) eine zylinderförmige Umfangswandung (13) mit einer umlaufenden Stufe (14) aufweist, die entlang einer Innenseite eines Rands der Umfangswandung (13) ausgebildet ist und in der der Radialabschnitt (30) des Jochs (3) fixiert ist und/oder der Radialabschnitt (30) des Jochs (3) in der Stufe (14) der Umfangswandung (13) verpresst ist.

9. Elektromagnetischer Aktuator nach einem der vorhergehenden Ansprüche, **dadurch gekennzeichnet, dass** der Kern (10) eine zylinderförmige Ausnehmung (15) zur Aufnahme des Ankerkörpers (21) aufweist, die in einer nach innen weisenden Stirnfläche des Kerns (10) ausgebildet ist, wobei insbesondere eine radiale Außenfläche des Ankerkörpers (21) an einer radialen Innenfläche der Ausnehmung (15) gelagert ist.

## Claims

1. Electromagnetic actuator (1) for actuating a valve, having a housing (12), a core (10) and a yoke (3), which are arranged opposite one another on the housing (12) or in the housing (12), having a coil body (60), which carries at least one coil winding (61), is arranged within the housing (12) and encloses an armature space (11) at least to some extent, having an armature (2), which is arranged within the armature space (11) such that it can be moved in an axial direction and which comprises an armature body (21) and an armature rod (20), and having a bearing element (5), which is fixed on the yoke (3) and has a disc-shaped, in particular annular-disc-shaped, fastening portion (51) and a tubular bearing portion (50), which bears the armature (2) and is formed in one piece on the fastening portion (51), wherein the bearing portion (50) projects inwards from the fastening portion (51), **characterized in that** a radial inner surface of an aperture (22) of the armature body (21) is mounted on a radial outer surface of the bearing portion (50) of the bearing element (5).

2. Electromagnetic actuator according to Claim 1, **characterized in that** the yoke (3) is designed in the form of a sintered component or is manufactured using a formative method, in particular by means of 3D printing, metal injection moulding, selective laser melting or selective laser sintering.

3. Electromagnetic actuator according to either of the preceding claims, **characterized in that** the armature rod (20) engages through a central bore of the core (10) and is mounted in this central bore of the core (10), and/or the armature rod (20) engages through the bearing element (5) and is mounted in the bearing portion (50) of the bearing element (5).

4. Electromagnetic actuator according to one of the preceding claims, **characterized in that** the armature body (21) has a cylindrical aperture (22), which is formed in an end surface of the armature body (21) oriented towards the bearing element (5) and in which the bearing portion (50) of the bearing element (5) engages when the armature body (21) is in abutment with the fastening portion (51) of the bearing element (5), and/or the bearing portion (50) engages in the aperture (22) of the armature body (21) in any position of the armature body (21).

5. Electromagnetic actuator according to one of the preceding claims, **characterized in that** the yoke (3) has a preferably cylindrical aperture (32), which is formed in an outer end surface (33) of the yoke (3) and in which the fastening portion (51) of the bearing element (5) is fixed, wherein in particular the fastening portion (51) of the bearing element (5) is press-fitted in the aperture (32) of the yoke (3).

6. Electromagnetic actuator according to one of the preceding claims, **characterized in that** the yoke (3) has a disc-shaped, in particular annular-disc-shaped, radial portion (30) and a tubular axial portion (31), which is formed in one piece on the disc-shaped radial portion (30) and projects inwards from the disc-shaped radial portion (30).

7. Electromagnetic actuator according to Claim 6, **characterized in that** the axial height (H) of the radial portion (30) is greater than the radial thickness (D) of the axial portion (31), preferably at least 1.5 times, preferably at least 1.8 times, particularly preferably at least 2 times, greater than the radial thickness (D) of the axial portion (31).

8. Electromagnetic actuator according to one of the preceding claims, **characterized in that** the housing (12) has a cylindrical circumferential wall (13) with an encircling step (14), which is formed along an inner side of a periphery of the circumferential wall (13) and in which the radial portion (30) of the yoke (3) is fixed, and/or the radial portion (30) of the yoke (3) is press-fitted in the step (14) of the circumferential wall (13).

9. Electromagnetic actuator according to one of the preceding claims, **characterized in that** the core (10) has a cylindrical aperture (15) for accommodating the armature body (21), said aperture being formed in an inwardly oriented end surface of the core (10), wherein in particular a radial outer surface of the armature body (21) is mounted on a radial inner surface of the aperture (15) .

## Revendications

1. Actionneur électromagnétique (1) destiné à actionner une vanne, comprenant un boîtier (12), un noyau (10) et une culasse (3), qui sont disposés opposés les uns aux autres au niveau du boîtier (12) ou dans le boîtier (12), un corps de bobine (60) qui porte au moins un enroulement de bobine (61), qui est disposé à l'intérieur du boîtier (12) et entoure au moins partiellement un espace d'induit (11), un induit (2) qui est disposé à l'intérieur de l'espace d'induit (11) avec mobilité dans une direction axiale et comporte un corps d'induit (21) et une tige d'induit (20), et un élément formant palier (5) qui est calé au niveau de la culasse (3) et possède une portion de fixation (51) en forme de disque, notamment en forme de disque annulaire, et une portion de palier (50) de forme tubulaire qui soutient l'induit (2), laquelle est formée d'un seul tenant au niveau de la portion de fixation (51), la portion de palier (50) faisant saillie vers l'intérieur depuis la portion de fixation (51), **caractérisé en ce qu'**une surface intérieure radiale d'une cavité (22) du corps d'induit (21) est supportée au niveau d'une surface extérieure de la portion de palier (50) de l'élément formant palier (5).

2. Actionneur électromagnétique selon la revendication 1, **caractérisé en ce que** la culasse (3) est réalisée sous la forme d'une pièce moulée frittée ou fabriquée dans un procédé formatif, notamment au moyen de l'impression 3D, le moulage par injection de poudre métallique, la fusion sélective par laser ou le frittage sélectif par laser.

3. Actionneur électromagnétique selon l'une des revendications précédentes, **caractérisé en ce que** la tige d'induit (20) traverse un alésage central du noyau (10) et est soutenue dans l'alésage central du noyau (10) et/ou la tige d'induit (20) traverse l'élément formant palier (5) et est supportée dans la portion de palier (50) de l'élément formant palier (5).

4. Actionneur électromagnétique selon l'une des revendications précédentes, **caractérisé en ce que** le corps d'induit (21) possède une cavité (22) cylindrique, qui est formée dans une surface frontale du corps d'induit (21) dirigée vers l'élément formant palier (5) et vient en prise dans la portion de palier (50) de l'élément formant palier (5) lorsque le corps d'induit (21) est en appui avec la portion de fixation (51) de l'élément formant palier (5) et/ou la portion de palier (50) vient en prise dans la cavité (22) du corps d'induit (21) dans n'importe quelle position du corps d'induit (21) .

5. Actionneur électromagnétique selon l'une des revendications précédentes, **caractérisé en ce que** la culasse (3) possède une cavité (32) de préférence de forme cylindrique, laquelle est formée dans une surface frontale (33) extérieure de la culasse (3) et est calée dans la portion de fixation (51) de l'élément formant palier (5), la portion de fixation (51) de l'élément formant palier (5) étant notamment comprimée dans la cavité (32) de la culasse (3).

6. Actionneur électromagnétique selon l'une des revendications précédentes, **caractérisé en ce que** la culasse (3) possède une portion radiale (30) en forme de disque, notamment en forme de disque annulaire, et une portion axiale (31) de forme tubulaire, laquelle est façonnée d'un seul tenant au niveau de la portion radiale (30) en forme de disque et fait saillie vers l'intérieur depuis la portion radiale (30) en forme de disque.

7. Actionneur électromagnétique selon la revendication 6, **caractérisé en ce que** la hauteur axiale (H) de la portion radiale (30) est supérieure à l'épaisseur radiale (D) de la portion axiale (31), de préférence au moins 1,5 fois, préférablement au moins 1,8 fois, notamment de préférence au moins 2 fois plus grande que l'épaisseur radiale (D) de la portion axiale (31).

8. Actionneur électromagnétique selon l'une des revendications précédentes, **caractérisé en ce que** le boîtier (12) possède une paroi périphérique (13) de forme cylindrique pourvue d'un gradin (14) circonférentiel, lequel est formé le long d'un côté intérieur d'un bord de la paroi périphérique (13) et est calé dans la portion radiale (30) de la culasse (3) et/ou la portion radiale (30) de la culasse (3) est comprimée dans le gradin (14) de la paroi périphérique (13).

9. Actionneur électromagnétique selon l'une des revendications précédentes, **caractérisé en ce que** le noyau (10) possède une cavité (15) de forme cylindrique destinée à recevoir le corps d'induit (21), laquelle est formée dans une surface frontale du noyau (10) dirigée vers l'intérieur, une surface extérieure radiale du corps d'induit (21) étant notamment en appui contre une surface intérieure radiale de la cavité (15).
